**Europäisches Patentamt**

**European Patent Office**

**Office européen des brevets**

(19)

(11) Veröffentlichungsnummer : **0 464 071 B1**

(12) **EUROPÄISCHE PATENTSCHRIFT**

(45) Veröffentlichungstag der Patentschrift :
09.06.93 Patentblatt 93/23

(51) Int. Cl.$^5$ : **F16B 25/10**

(21) Anmeldenummer : 90904814.2

(22) Anmeldetag : 23.03.90

(86) Internationale Anmeldenummer :
PCT/EP90/00476

(87) Internationale Veröffentlichungsnummer :
WO 90/11458 04.10.90 Gazette 90/23

(54) **LOCH- UND GEWINDEFORMENDE SCHRAUBE.**

(30) Priorität : 23.03.89 DE 3909725
10.07.89 DE 3922684

(43) Veröffentlichungstag der Anmeldung :
08.01.92 Patentblatt 92/02

(45) Bekanntmachung des Hinweises auf die
Patenterteilung :
09.06.93 Patentblatt 93/23

(84) Benannte Vertragsstaaten :
AT BE CH DE DK ES FR GB IT LI LU NL SE

(56) Entgegenhaltungen :
EP-A- 338 973
DE-A- 2 537 446
DE-A- 2 552 665
FR-A- 1 581 931
US-A- 3 156 152
US-A- 3 438 299

(73) Patentinhaber : EJOT Eberhard Jaeger GmbH
& Co. KG
Untere Bienhecke Postfach 11 47
W-5928 Bad Laasphe- 1 (DE)

(72) Erfinder : GROSSBERNDT, Hermann
Lahnstr. 1
W-5928 Bad Laasphe (DE)
Erfinder : KRETSCHMER, Günter
Setzer Weg 8
W-5900 Siegen (DE)
Erfinder : KLEES, Horst
Wiesenweg 4
W-3565 Breidenbach-Achenbach (DE)
Erfinder : GÜVEN, Ali
Brandenburger Str. 19
W-5920 Bad Berleburg (DE)

(74) Vertreter : Altenburg, Udo, Dipl.-Phys. et al
Patent- und Rechtsanwälte
Bardehle-Pagenberg-Dost-Altenburg
Frohwitter-Geissler & Partner Postfach 86 06
20
W-8000 München 86 (DE)

**Beschreibung**

Die Erfindung bezieht sich auf eine loch- und gewindeformende Schraube bis ca. 6 mm Gewindedurchmesser zum Eindrehen in Metallblech einer Dicke bis etwa 1 mm mit einem eine Werkzeugaufnahme aufweisenden Kopf, einem Gewindeschaft und einem daran anschließenden Zylinderteil mit einem unter dem Flankendurchmesser des Gewindeschaftes liegenden Durchmesser, das in ein sich verjüngendes Lochformteil übergeht.

Eine derartige Schraube ist aus der DE-C-25 37 446 bekannt. Bei dieser als selbstschneidende Blechschraube bezeichneten Schraube dient das Lochformteil dazu, das die Schraube später aufnehmende Loch durch Zerspanung zu bohren, wozu das Lochformteil in einer ausgeprägten Spitze ausläuft, die die Spitze einer Pyramide bildet, deren Kanten der Zerspanung des betreffenden Blechteils dienen. Gemäß Figur 18 dieser Patentschrift ist zwischen dem durchgehend zylindrisch ausgebildeten Gewindeschaft und dem nach Art einer Pyramide ausgebildeten Lochformteil ein Zylinderteil angeordnet, dessen Durchmesser gleich dem Flankendurchmesser der Gewindegänge oder kleiner ist. Diz Aufgabe dieses Zylinderteils besteht darin, das gebohrte Loch an die Zylinderform anzupassen und dessen Achsrichtung senkrecht zum Loch auszurichten, um den Gewindeschaft ohne Verkantung in das Blech hineinführen zu können.

Eine weitere loch- und gewindeformende Schraube ist aus der DE-C-27 32 695 bekannt. Auch diese Schraube beruht auf dem Prinzip, mit einer scharfen Spitze ihres kegelförmig ausgebildeten Lochformteils zunächst in das Material des Blechs einzudringen und in diesem einen Führungskanal aufzubohren. Das Lochformteil dieser Schraube ist darüberhinaus mit einem Gewindegang großer Steigung versehen, von dem bei weiterem Eindringen der Schraube in das Material des Blechs eine Aufweitung des von der scharfen Spitze zunächst gebohrten Führungskanals bewirkt werden soll, die sich in Form einer Ausstülpung öffnet. Das Gewinde des Gewindeschaftes geht bei dieser Schraube direkt in das Lochformteil über.

Aufgrund der feinen Zerspanung des Blechmaterials beim Eindrehen der bekannten Schrauben ergeben sich verschiedene Nachteile. Feine Metallspäne setzen sich im Inneren von Gehäusen und dergleichen ab, wo sie z.B. im Fall elektrischer Geräte unerwünschte und gefährliche Kontaktbrücken bilden können. Außerdem lassen sich feine Späne schlecht entfernen und führen insbesondere im Falle des Zutritts von Feuchtigkeit bzw. feuchter Luft zu unerwünschter Korrosion.

Es ist weiterhin aus der FR-A 1 581 931 bekannt, eine loch- und gewindeformende Schraube an ihrem vorderen Ende mit einer ausgeprägten konisch zulaufenden Spitze zu versehen, die zur Ausbildung des Lochs in einem Blechteil in dieses nach Art eines Nagels eingeschlagen wird. Dabei wird jedoch das Blech der Gefahr ausgesetzt, daß es im Bereich des eingeschlagenen Loches einreißt, so daß das mit dem Eindrehen des Gewindeteils der Schraube entstehende Gewinde ebenfalls Risse aufweisen kann, die die auf die Schraube wirkenden Haltekräfte des Blechs erheblich beeinträchtigen.

Der Erfindung liegt die Aufgabe zugrunde, die eingans beschriebende Schraube so zu gestalten, daß das Spanproblem vermieden und ein besonders fester Sitz der eingedrehten Schraube im Metallblech geschaffen wird.

Erfindungsgemäß geschieht dies dadurch, daß der Gewindeschaft über eine sich etwa über vier Gewindegänge erstreckende Verjüngung als Bestandteil des Gewindeschaftes in das Zylinderteil übergeht, dessen Länge etwa der vierfachen Blechdicke entspricht, daß das Lochformteil in einer das Blech durch Rotation erweichenden balligen Reibfläche endet, die einem Radius von etwa 0,5 mm entspricht, und daß die gesamte Schraube einstückig aus vergütetem Stahl mit einer Zugfestigkeit bis etwa 1400 N/mm² bzw. einsatzgehärtetem Stahl besteht.

Die erfindungsgemäße Schraube schafft sich das Loch im Metallblech durch Reibung der balligen Reibfläche gegenüber dem Metallblech, das hierdurch so erhitzt wird, daß das Material in seinen plastischen Bereich überführt wird, in dem es radial so nachgiebig wird, daß sich eine erwünschte Lochaufweitung mit Materialverdrängung zu einer Düse ergibt Es hat sich dabei ergeben, daß bei einem Radius von ca. 0,5 mm der Balligkeit der Reibfläche sich eine günstige Zentrierfähigkeit, ausreichend schnelle Wärmeentwicklung bei hoher Eindringgeschwindigkeit und guter Wärmefluß durch die Schraube ergeben. In die Düse dringt dann beim weiteren Eindrehen der Schraube deren Zylinderteil ein, womit die Ausformung des Loches mit der Düse beendet ist. Nunmehr greift die Verjüngung des Gewindeschaftes in das Loch ein, wodurch das Muttergewinde in dem Loch ausgeformt wird, was durch die Verjüngung entsprechend erleichtert wird. Dabei ermöglicht das Zylinderteil gewissermaßen eine Abstufung der Drehzahl der einzudrehenden Schraube, da für das zunächst erfolgende Ausformen des Loches aufgrund von Reibung eine wesentlich höhere Drehzahl als für das Ausformen des Gewindes erforderlich ist. Es wird hierdurch vermieden, daß etwa während des Endes des Ausformvorganges des Loches die Gewindegänge der Verjüngung des Gewindeschaftes bereits greifen müssen.

Die Erhitzung des Metallbleches durch die von der balligen Reibfläche erzeugte Reibung ist von der Andrückkraft abhängig, mit der die Reibfläche gegen das Metallblech gedrückt wird. Der für eine ausreichende Erhitzung erforderliche Druck läßt sich dadurch reduzieren, daß dem Metallblech an der Stelle der Ausformung des Lochs eine kegelige Senkung gegeben wird. In diesem Falle und bei einer derartigen Öffnung des Kegelmantels, daß die Berührungszone mit der balligen Reibfläche nur im Bereich des Kegelmantels liegt, ist die ballige Reibfläche so gestaltet, daß diese einem Radius von etwa 0,5 bis 1 mm entspricht.

Bei der Verarbeitung von Metallblech ist es in der Regel erforderlich, dieses zunächst auf bestimmte Abmessungen zuzuschneiden, wobei häufig auch Körnungen für danach anzubringende Bohrungen vorzusehen sind. Die Anbringung einer kegeligen Senkung stellt daher im Rahmen derartiger vorbereitender Maßnahmen keinen besonderen Aufwand dar, zumal es sich bei der kegeligen Senkung um kein Durchgangsloch handelt, also ein Stanzvorgang mit Abfallbildung nicht erforderlich ist. Aufgrund der kegeligen Senkung läßt sich gegenüber dem oben beschriebenen Fall des Aufsetzens der Schraube mit ihrer balligen Reibfläche auf das ebene Metallblech die für die Erhitzung erforderliche Berührungszone erheblich erweitern, namlich ringartig in den Bereich des Kegelmantels, wodurch gegenüber dem Aufsetzen der Schraube auf eine ebene Metallfläche eine wesentliche Reduzierung der erforderlichen Andrückkraft der Schraube gegenüber dem Metallblech möglich wird. Diese Reduzierung der Andrückkraft wird auch durch die Vergrößerung des Radius' der balligen Reibfläche günstig beeinflußt, da hierdurch der Radius der ringartigen Berührungszone und damit deren Länge entsprechend erweitert wird.

Aufgrund dieser erfindungsgemäßen Gestaltung der Schraube ergibt sich ein besonders großes Lösemoment, da die erhitzte Düse am Ende des Eindrehvorganges um den demgegenüber kälteren Gewindeschaft schrumpft. Hierdurch erhält man einen besonders erwünschten Sicherungseffekt für die eingedrehte Schraube.

Werkzeuge zum Ausformen eines Loches in einem Metallblech, die durch Reibung das Blech erhitzen und durch konische Gestaltung ihrer Vorderseite ein Loch mit düsenartigen Fortsätzen erzeugen, sind z. B. aus der DE-A-25 52 665 und DE-A-28 02 229 bekannt. Diese Werkzeuge bestehen aus einem schnell um seine Achse drehbaren Dorn, der mit einer Zentrierspitze bzw. Dornspitze auf das Blech aufgesetzt wird und das Material des Bleches aufgrund von Reibungshitze so plastifiziert, daß der sich an die Spitze anschließende kegelige Teil des Werkzeugs eine Aufweitung des Lochs bis zum maximalen Durchmesser des Kegels bewirken kann, an den sich dann ein zylindrischer Dornteil anschließt. Es ist auch aus der FR-PS 1 189 384 bekannt, die vorderste Stelle eines solchen Kegels abzurunden.

Die Technik dieser Werkzeuge ist bisher auf loch- und gewindeformende Schrauben nicht angewendet worden. Der Grund liegt offenbar darin, daß man befürchtet hat, daß die erhebliche Erwärmung des auf das Blech auftreffenden Werkzeugteils das Werkzeug bis zur Zerstörung gefährdet. Aus diesem Grunde bestehen die in der Praxis bekannt gewordenen Werkzeuge, sogenannte Fließbohrer, aus warmfesten Werkstoffen, insbesondere Hartmetall. Derartige Werkstoffe kommen sowohl aus Kostengründen als auch aus technischen Gründen für die hier in Rede stehenden Schrauben nicht infrage, da diese vor allem erheblichen Zugspannungen ausgesetzt werden, für die insbesondere Hartmetall ungeeignet ist. Es hat sich nun gezeigt, daß in Metallbleche, insbesondere Stahlbleche, bis zu einer Dicke von 1 mm, Löcher unter Verwendung eines Lochformteiles mit der erwähnten balligen Reibfläche unter Ausnutzung der dabei entstehenden erheblichen Reibungswärme geformt werden können, wenn für die Schraube als Ganzes vergüteter Stahl mit einer Zugfestigkeit bis etwa 1400 N/mm$^2$ bzw. einsatzgehärteter Stahl verwendet wird. Beide Materialien eignen sich aufgrund ihrer Zugfestigkeit in hohem Maße für die Verwendung als Schrauben. Dabei ergibt sich beim Formen des Loches im Metallblech aufgrund der balligen Reibfläche eine hohe Reibungswärme, die in dem relativ dünnen Metallblech schlecht abfließen kann, so daß sich im Metallblech ein dessen Plastifizierung begünstigender Wärmestau ergibt. Wegen der relativ geringen Dicke des Metallblechs findet dabei praktisch noch keine mechanische Beeinträchtigung der balligen Reibfläche statt, so daß das Loch mit solcher Geschwindigkeit ausgefomt wird, daß die Reibfläche praktisch erhalten bleibt. Selbst wenn dabei die Reibfläche beeinträchtigt wird, so spielt dies für das Eindringen der Schraube praktisch keine Rolle, da mit der Schraube das Formen des Loches nur ein einziges Mal erforderlich ist und anschließend daran die weitgehend problemlose Ausformung des Gewindes erfolgt.

Zweckmäßig bildet man das Lochformteil einem Kegel ähnlich aus. Der Kegel sorgt aufgrund seiner Geometrie für eine kontinuierliche Materialförderung sowohl in radialer als auch in axialer Richtung.

Es kann dabei erwünscht sein, die Reibung der Kegeloberfläche gegenüber dem Material des Blechs zu vermindern, was dadurch erfolgt, daß der Kegel mit mehreren, symmetrisch angeordneten Abflachungen versehen ist, die im Querschnitt kegelig abgerundet ineinander übergehen. Die Verformung des Blechmaterials wird hierdurch erleichtert.

Die Materialumformung läßt sich weiter dadurch erleichtern, daß Kegel und Abflachungen in axialer Abrundung in das Zylinderteil übergehen. Aufgrund der axialen Abrundung ergibt sich bis zum Erreichen des Zylinderteils eine gleichmäßige Aufweitung des umzuformenden Materials und damit ein günstiger Materialfluß. Die Schraube kann daher hinsichtlich ihres Lochformteils zweckmäßig so gestaltet sein, daß der Kegelwinkel

3

im Mittel etwa bei 30° bis 40° liegt.

Die Ausbildung der durch plastische Verformung gebildeten Düse ermöglicht es, in die Düse Muttergewinde einer Steigung einzuformen, die wesentlich kleiner ist als die übliche Steigung bei bekannten sogenannten Blechschrauben.

Die Schraube kann daher zweckmäßig so gestaltet sein, daß die Steigung P des Gewindes in Bezug auf dessen Außendurchmesser d der Formel P = 0,15 bis 0,20 d entspricht.

Wenn es erwünscht ist, diesen Kragen beim Anziehen der Schraube nicht einzudrücken, gestaltet man den Kopf der Schraube zweckmäßig so, daß dieser an seiner dem Gewindeschaft zugewandten Unterseite eine Ringnut aufweist, deren innere Wandung einen im wesentlichen dem Radius der Gewindeflanken entsprechenden Radius aufweist und die die Stirnseite einer beim Eindringen der Schraube in das Metallblech ausgeformten Düse, also den vorstehend erwähnten Kragen, aufnimmt.

Das Eindrücken des Kragens mit einer Schraube mit glatter Unterseite ihres Schraubenkopfes hat häufig zur Folge, daß der Kragen dabei in gewissem Umfang zerspant wird. Derartige Metallspäne sind wegen Verschmutzung und späterer Korrosion unerwünscht, im Falle der Anwendung der Schraube im Zusammenhang mit elektrischen Geräten können Metallspäne auch zu elektrischen Komplikationen, insbesondere Kurzschlüssen, führen.

Der Ringnut kann man einen rechteckigen Querschnitt geben. Hierzu wird die Ringnut bei der Herstellung der Schraube in den Schraubenkopf eingepreßt.

Es ist auch möglich, die äußere Wandung der Ringnut von ihrem Grund schräg nach axialen verlaufen zu lassen. In diesem Falle kann die schräge Ringnut den Kragen bei dessen Aufsetzen auf der schrägen Wandung nach innen drücken. Mit dieser Gestaltung läßt sich insbesondere der Kragen an das Gewinde anpressen, wozu der Ringnut eine solche Tiefe gegeben wird, daß die Stirnseite der Düse bei angezogener Schraube in Richtung auf den Gewindeschaft eingedrückt ist. Hierdurch erreicht man einerseits eine besonders gute Abdichtung zwischen der Düse und dem Gewinde der Schraube, andererseits auch eine Verklemmung der Schraube, durch die deren Lösemoment sich erheblich erhöhen läßt.

Ein Ausführungsbeispiel der Erfindung ist in den Figuren dargestellt. Es zeigen

| | |
|---|---|
| Figur 1 | die erfindungsgemäße Schraube in Seitensicht, |
| Figur 2 | einen Schnitt längs der Linie A - A in vergrößertem Maßstab aus Figur 1. |
| Figuren 3 bis 5 | einzelne Phasen des Einformens in ein Metallblech |
| Figur 6 | die Schraube mit einer rechteckförmigen Ringnut in ihrem Kopf in Seitensicht, |
| Figur 7 | einen Schnitt längs der Linie B - B in Figur 1, |
| Figur 8 | die in ein Blech eingeformte Schraube, |
| Figur 9 | die in ein Blech eingeformte Schraube mit an das Gewinde angedrückter Stirnseite der Düse. |
| Figur 10a und b | die Schraube in Gegenüberstellung zu einem mit einer kegeligen Senkung versehenen Metallblech, |
| Figur 11 | das Zusammenwirken der Schraube mit der kegeligen Senkung, |
| Figur 12 | eine in der Mitte einer Vertiefung angebrachte kegelige Senkung. |

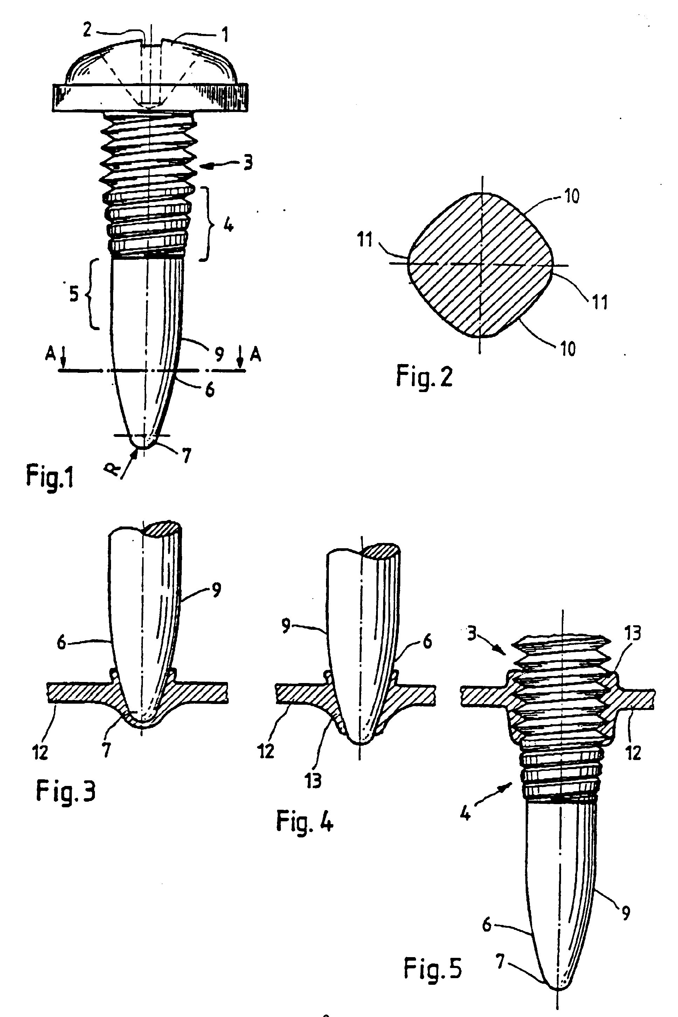

Die in der Figur 1 dargestellte Schraube weist den Kopf 1 auf, der hier mit dem Kreuzschlitz 2 versehen ist, der als Werkzeugaufnahme dient. An den Kopf 1 schließt sich der Gewindeschaft 3 an, der an seiner dem Kopf 1 abgewandten Seite die Verjüngung 4 aufweist. Diese Verjüngung erstreckt sich hier über vier Gewindegänge. Es ist natürlich auch möglich, die Anzahl der Gewindegänge geringfügig zu erhöhen oder zu reduzieren. Die Verjüngung ergibt sich dadurch, daß die betreffenden Gewindegänge in ihrem Außendurchmesser abnehmen. Das Gewinde des Gewindeteils 3 ist vorzugsweise gerollt.

An den Gewindeschaft 3 mit der Verjüngung 4 schließt sich das Zylinderteil 5 an, dessen Durchmesser dem Kerndurchmesser des Gewindeschaftes 3 entspricht. Der Durchmesser des Zylinderteils 5 kann auch geringfügig größer oder kleiner gewählt werden. Er soll jedoch unter dem Flankendurchmesser des Gewindeteils 3 liegen. Die axiale Länge des Zylinderteils 5 entspricht etwa der vierfachen Blechdicke, wenn davon ausgegangen wird, daß die Schraube in zwei Bleche mit einer Dicke von je 1 mm eingebracht werden soll, wobei dann noch zu berücksichtigen ist, daß sich pro Blech eine Ausformung einer Düse ergibt, deren Länge ebenfalls im Bereich von 1 mm liegt.

An das Zylinderteil 5 schließt sich das Lochformteil 6 an, das schließlich in der balligen Reibfläche 7 endet, deren Balligkeit einem Radius R von etwa 0,5 mm entspricht.

Aus Figur 1 ergibt sich, daß das Lochformteil einem Kegel ähnlich ausgebildet ist, der in axialer Abrundung 9 in das Zylinderteil 5 übergeht.

Aus Figur 2, die einen Schnitt längs der Linie A - A aus Figur 1 darstellt, ist ersichtlich, daß längs des Lochformteils 6 vier symmetrische Abflachungen 10 verlaufen, so daß sich gegenüber den Abflachungen 10 schärfere Abrundungen 11 ergeben, die beim Eindrehen des Lochformteils 6 in ein Metallblech 12 (in Figuren 3 bis

dessen Material sowohl radial als auch axial wegdrücken.

Anhand der Figuren 3, 4 und 5 sei nunmehr das Eindrehen der Schraube in ein Metallblech 12, z. B. ein Stahlblech, erläutert.

Zunächst wird das Lochformteil 6 mit seiner Reibfläche 7 auf das Blech 12 aufgedrückt und mit einer Drehzahl von ca. 4000 Umdrehungen/min. in Drehung versetzt. Es wird dabei davon ausgegangen, daß es sich um ein Metallblech 12 von einer Dicke von 1 mm und eine Schraube mit einem Zylinderteil mit einem Durchmesser von 5 mm handelt. Aufgrund des Druckes der Reibfläche 7 auf das Blech 12 und der hohen Drehzahl ergibt sich zwischen Reibfläche 7 und der berührten Oberfläche des Bleches 12 eine so erhebliche Reibungswärme, daß das Material des Bleches 12 plastifiziert wird, wobei es sowohl in Richtung auf die Schraube als auch von dieser weg ausweicht und schließlich, wie Figur 4 zeigt, die Düse 13 bildet, die sich sowohl oberhalb als auch unterhalb des Bleches 12 erstreckt. Der Kegelwinkel des Lochformteils 6 beträgt hier 35°. Bei diesem Winkel bilden sich Längen der Düse 13 oberhalb und unterhalb des Bleches 12 aus, die sich derart unterscheiden, daß die Länge unterhalb des Bleches 12 etwa das Doppelte von der Länge oberhalb des Bleches 12 ist. Mit demgegenüber abnehmendem Kegelwinkel wird die Länge der Düse 13 unterhalb des Bleches 12 weiterhin gegenüber der Länge oberhalb des Bleches 12 verlängert.

Der Vorgang der plastischen Verformung des Bleches 12 mit der Düse 13 schreitet dann fort, bis die Düse 13 das Zylinderteil 5 erreicht hat, wo dann die Verjüngung 4 des Gewindeteils 3 in die Düse 13 eindringt. Bereits im Bereich der axialen Abrundung 9 ergibt sich für das weitere Eindringen der Schraube ein stark zunehmendes Drehmoment, so daß bei entsprechend dimensioniertem Antriebsorgan für das Eindrehwerkzeug dieses seine Drehzahl verringert und nunmehr die Verjüngung 4 des Gewindeschafts 3 in die Düse 13 eindringt und in dieser das entsprechende Gewinde furcht. Dieser Vorgang führt zu dem weiteren Eindringen des Gewindeschaftes 3 in die Düse 13 (Figur 5), bis schließlich (nicht dargestellt) die Düse 13 an dem in Figur 1 dargestellten Kopf 1 anläuft. Die Schraube ist damit vollständig in das Blech 12 mit seiner Düse 13 eingedreht. Der Kopf 1 bildet dabei gegenüber der Düse 13 eine Abdichtung, da diese sich relativ leicht durch die Unterseite des Kopfes 1 verformen läßt und sich an den Kopf entsprechend anpaßt.

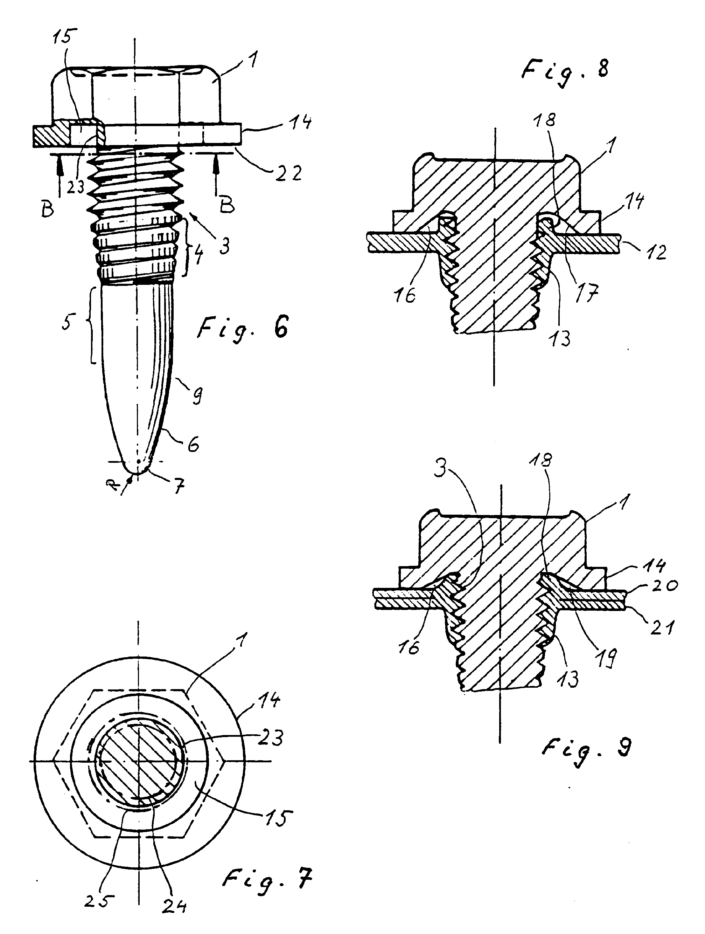

Die in der Figur 6 dargestellte Schraube weist den Kopf 1 auf, der hier als Sechskantkopf ausgebildet ist. Der Kopf 1 weist bei diesen Ausführungsbeispielen den Bund 14 auf, in dessen Unterseite 22 die Ringnut 15 eingearbeitet ist. Zweckmäßig wird die Ringnut 15 in den Bund 14 eingedrückt, sie weist hier einen rechteckigen Querschnitt auf. An den Bund 14 schließt sich das Gewinde 3 an, auf das dann die in der Figur 6 des Hauptpatents dargestellten weiteren Bestandteile der Schraube folgen.

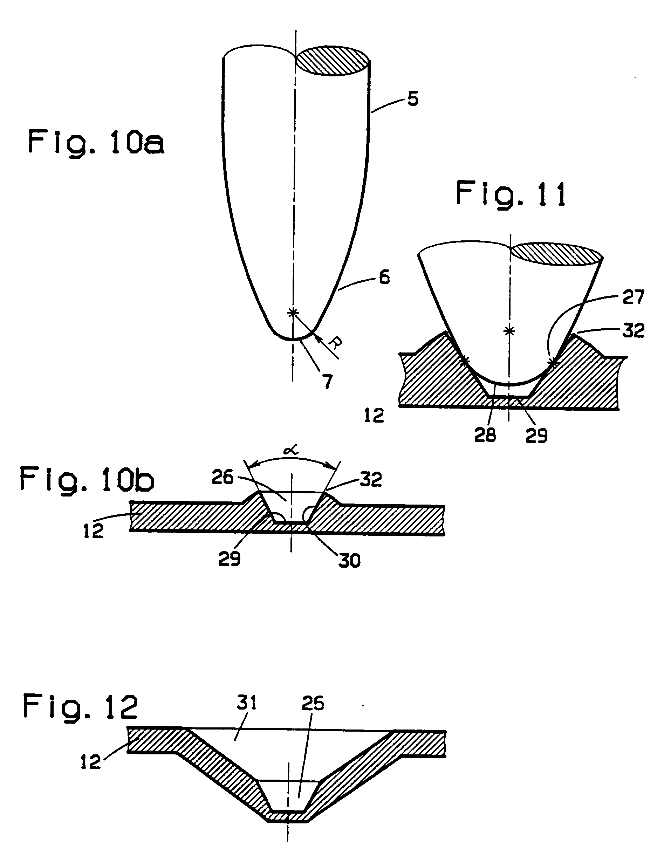

Figur 7 zeigt einen Schnitt durch die Schraube gemäß Figur 6 längs der Linie B - B. Aus Figur 7 ist ersichtlich, daß die innere Wandung 23 der Ringnut 15 einen Radius besitzt, der hier zwischen den Radien des Gewindegrundes 24 und der Gewindespitzen 25 des Gewindes 3 liegt, die in Figur 7 jeweils als strichpunktierte Linie eingezeichnet sind, also dem Radius der Gewindeflanken entspricht.

Figur 8 zeigt die Schraube mit gegenüber dem Blech 12 angezogenem Kopf 1, wobei die Stirnseite 18 der Düse 13 von der Ringnut 16 vollständig aufgenommen wird. Die Stirnseite 18 bleibt also beim Anziehen des Kopfes 1 der Schraube erhalten. Die Ringnut 16 besitzt eine von ihrem Grund schräg nach außen verlaufende Wandung 17. Dieser Verlauf der Wandung 17 gibt im Falle eines Berührens der Stirnseite 18 mit der Wandung 17 der Stirnseite 18 die Tendenz, nach innen in Richtung auf das Gewinde zu drücken.

Dieser Effekt ist in der Figur 9 dargestellt. Bei der Ausführungsform gemäß Figur 9 ist die Ringnut 16 nicht so tief in den Kopf 1 eingedrückt, so daß die Stirnseite 18 der Düse 13 beim Anziehen des Kopfes 1 gegen die schräge Wandung 19 aufläuft und dabei radial nach innen auf das Gewinde zu gequetscht wird, wodurch sich die Stirnseite 18 fest um das Gewinde legt, damit eine Abdichtung schafft und außerdem die Schraube in der Düse 13 verklemmt.

Bei dem in Figur 9 dargestellten Ausführungsbeispiel handelt es sich um ein geschichtetes Blech, bestehend aus den beiden Schichten 20 und 21, die beim Eindrehen der Schraube aneinander anliegen und in denen sich in gleicher Weise wie beim Ausfürungsbeispiel gemäß Figur 8 eine durchgehende Düse 13 mit Stirnseite 18 ausbildet, in der das Material aus beiden Schichten 20 und 21 ineinander übergeht. Im Falle des Einformens des Schraubenloches in übereinanderliegende Bleche ist es möglich, die Gesamtdicke etwas gegenüber der Dicke eines einzelnen zu verarbeitenden Bleches zu erhöhen, z. B. auf 1,8 mm.

Anhand der Figuren 10 bis 12 sei nunmehr die Anwendung der erfindungsgemäßen Schraube im Zusammenhang mit dem Eindrehen in Metallblech mit einer kegeligen Senkung erläutert.

Figur 10a zeigt den Zylinderteil 5 mit anschließendem Lochformteil 6 und der balligen Reibfläche 7 der gewindeformenden Schraube, bei der der Radius R im Bereich von etwa 0,5 bis 1 mm liegt. Diese Schraube wirkt zusammen mit dem mit der kegeligen Senkung 26 versehenen Metallblech 12 gemäß Figur 10b. Der Kegelwinkel $\alpha$ der Senkung 26 beträgt hier 54°. In diese Senkung 26 wird die ballige Reibfläche 7 eingeführt und bildet dann die aus Figur 11 ersichtliche Berührungszone 27, die sich ringartig um die ballige Reibfläche 7 schließt. Das vordere Ende 28 (siehe Figur 11) der balligen Reibfläche 7 hält dabei vom Grund 29 der Senkung 26 einen geringen Abstand ein, so daß die Berührung mit dem Metallblech 12 nur im Bereich des Kegelmantels 30 der Senkung 26 existiert, und zwar gemäß Figur 11 unterhalb der Kante 32 des Kegelmantels 30. Es ist jedoch auch möglich, die ballige Reibfläche 7 auf der Kante 32 aufsetzen zu lassen, obwohl dies hinsichtlich der erzeugten Reibung etwas ungünstiger ist. Die auf die Schraube wirkende Andrückkraft erzeugt also nur im Bereich der Berührungszone 27 eine Reibung, die aufgrund der erheblichen flächenmäßigen Ausdehnung der Berührungszone 27 auch schon bei relativ geringen Andrückkräften zu der erforderlichen Erhitzung des Materials des Metallblechs 12 führt. Bei einer mit M5-Gewinde versehenen Schraube ergibt sich dabei eine Andrückkraft von etwa 150 N.

Insbesondere bei kleinen Schrauben, z. B. mit einem Gewinde von M3, ist der große Durchmesser der kegeligen Senkung 26 etwa 1 mm. Eine derart kleine kegelige Senkung ist unter Umständen von der in das betreffende Blech einzudrehenden Schraube schlecht zu finden. Infolgedessen kann es zweckmäßig sein, die kegelige Senkung am Ende einer Vertiefung vorzusehen, wie dies in Figur 12 dargestellt ist. Gemäß dieser Figur ist in das Metallblech 12 die Vertiefung 31 und zentrisch in deren Grund die kegelige Senkung 26 eingedrückt, ohne daß das Metallblech 12 durchbrochen ist. Eine in Richtung auf die Vertiefung 31 geführte Schraube wird dann von der Wandung der Vertiefung 31 automatisch in die Senkung 26 geführt, wo sie dann in der gleichen Weise wirkt, wie anhand der Figur 11 beschrieben ist.

Aufgrund der über die Berührungszone 27 sich ergebenden Erhitzung des Materials des Metallbleches ergibt sich dann eine Verformung, wie diese oben anhand der Figuren 3, 4 und 5 beschrieben ist.

## Patentansprüche

1. Loch- und gewindeformende Schraube bis ca. 6 mm Gewindedurchmesser zum Eindrehen in Metallblech einer Dicke bis etwa 1 mm mit einem eine Werkzeugaufnahme aufweisenden Kopf (1), einem Gewindeschaft (3) und einem daran anschließenden Zylinderteil (5) mit einem unter dem Flankendurchmesser des Gewindeschaftes (3) liegenden Durchmesser, das in ein sich verjüngendes Lochformteil (6) übergeht, **dadurch gekennzeichnet**, , daß der Gewindeschaft (3) über eine sich etwa über vier Gewindegänge erstreckende Verjüngung (4) als Bestandteil des Gewindeschaftes (3) in das Zylinderteil (5) übergeht, dessen Länge etwa der vierfachen Blechdicke entspricht, daß das Lochformteil (6) in einer das Blech (12) durch Rotation erweichenden balligen Reibfläche (7) endet, die einem Radius (R) von etwa 0,5 mm entspricht und daß die gesamte Schraube einstückig aus vergütetem Stahl mit einer Zugfestigkeit bis etwa 1400 N/mm$^2$ bzw. einsatzgehärtetem Stahl besteht.

2. Schraube nach Anspruch 1 zum Eindrehen in Metallblech mit einer kegeligen Senkung, **dadurch gekennzeichnet**, daß bei einem Kegelwinkel ($\alpha$) der Senkung (26) von etwa 50° bis 70° und einer nur im Bereich des Kegelmantels (30) liegenden Berührungszone (27) mit der balligen Reibfläche (7) diese einem Radius von etwa 0,5 bis 1 mm entspricht.

3. Schraube nach Anpruch 1 oder 2, **dadurch gekennzeichnet,** daß das Lochformteil (6) einem Kegel ähnlich ausgebildet ist.

4. Schraube nach Anspruch 3, **dadurch gekennzeichnet,** daß der Kegel mit mehreren, symmetrisch angeordneten Abflachungen (10) versehen ist, die im Querschnitt kegelig abgerundet ineinander übergehen.

5. Schraube nach Anspruch 3 oder 4, **dadurch gekennzeichnet**, daß Kegel und Abflachungen (10) in axialer Abrundung (9) in das Zylinderteil (5) übergehen.

6. Schraube nach einem der Ansprüche 1 bis 5, **dadurch gekennzeichnet**, daß der Kegelwinkel im Mittel etwa bei 30° bis 40° liegt.

7. Schraube nach einem der Ansprüche 1 bis 6, **dadurch gekennzeichnet**, daß die Steigung P des Gewindes in Bezug auf dessen Außendurchmesser d der Formel

$$P = 0,15 \text{ bis } 0,20 \ d$$

entspricht.

8. Schraube nach einem der Ansprüche 1 bis 7, **dadurch gekennzeichnet**, daß der Kopf (1) an seiner dem Gewindeschaft zugewandten Unterseite (22) eine Ringnut (15, 16) aufweist deren innere Wandung einen im wesentlichen dem Radius der Gewindeflanken entsprechenden Radius aufweist und die die Stirnseite (18) einer beim Eindringen der Schraube in das Metallblech (12; 20, 21) ausgeformten Düse (13) aufnimmt.

**9.** Schraube nach Anspruch 8, **<u>dadurch gekennzeichnet</u>**, daß die Ringnut (15) rechteckigen Querschnitt aufweist.

**10.** Schraube nach Anspruch 8, **<u>dadurch gekennzeichnet</u>**, daß die äußere Wandung (17, 19) der Ringnut (16) von ihrem Grund schräg nach axialen verläuft.

**11.** Schraube nach einem der Ansprüche 8 bis 10, **<u>dadurch gekennzeichnet</u>**, daß die Ringnut (16) eine solche Tiefe besitzt, daß die Stirnseite (18) der Düse (13) bei angezogener Schraube in Richtung auf den Gewindeschaft (3) eingedrückt ist.

### Claims

**1.** Self-tapping drill screw with a maximum thread diameter of approximately 6 mm for screwing into a metal sheet with a maximum thickness of approximately 1 mm, comprising a head (1) having a tool holder, a threaded shank (3) and a cylindrical portion (5) connected thereto which has a smaller diameter than the effective diameter of the threaded shank (3) and which merges into a tapering drilling portion (6), characterised in that the threaded shank (3) merges via a taper (4) extending as a component of the threaded shank (3) over approximately four threads into the cylindrical portion (5), the length of which corresponds approximately to four times the sheet thickness, that the drilling portion (6) ends in a spherical friction surface (7) which softens the sheet (12) by rotation and which has a radius (R) of approximately 0.5 mm and that the entire screw is made in one piece from quenched and tempered steel with a tensile strength of up to approximately 1400 N/mm$^2$ or from case-hardened steel.

**2.** Screw according to claim 1 for screwing into a metal sheet with a tapered countersink, characterised in that given a taper angle ($\alpha$) of the countersink (26) of approximately 50° to 70° and a zone (27) of contact with the spherical friction surface (7) situated only in the region of the outer surface (30) of the cone, the said friction surface has a radius of approximately 0.5 to 1 mm.

**3.** Screw according to claim 1 or claim 2, characterised in that the drilling portion (6) is shaped like a cone.

**4.** Screw according to claim 3, characterised in that the cone is provided with a plurality of symmetrically arranged flattened portions (10) which in cross section merge into one another in a tapering rounded manner.

**5.** Screw according to claim 3 or claim 4, characterised in that the cone and the flattened portions (10) merge into the cylindrical portion (5) in an axial curvature (9).

**6.** Screw according to one of claims 1 to 5, characterised in that the taper angle is on average approximately 30° to 40°.

**7.** Screw according to one of claims 1 to 6, characterised in that the pitch P of the thread in relation to its outer diameter d corresponds to the formula
$$P = 0.15 \text{ to } 0.20 \text{ d.}$$

**8.** Screw according to one of claims 1 to 7, characterised in that the head (1) has an annular groove (15, 16) on its underside (22) directed towards the threaded shank, the inner wall of said annular groove having a radius essentially corresponding to the radius of the thread flanks and receiving the front end (18) of a throat (13) formed when the screw penetrates into the metal sheet (12; 20, 21).

**9.** Screw according to claim 8, characterised in that the annular groove (15) has a rectangular cross section.

**10.** Screw according to claim 8, characterised in that the outer wall (17, 19) of the annular groove (16) slopes outwards from its base.

**11.** Screw according to one of claims 8 to 10, characterised in that the annular groove ( 16 ) has a depth such that the front end (18) of the throat (13) is pressed in the direction of the threaded shank (3) when the screw is tightened.

## Revendications

1. Vis autotaraudeuse d'au plus environ 6 mm de diamètre de filetage, à enfoncer par rotation dans une tôle métallique d'au plus environ 1 mm d'épaisseur, avec une tête (1) présentant un logement d'outil, et avec un corps fileté (3) auquel se raccorde une partie cylindrique (5) présentant un diamètre inférieur au diamètre sur flancs du corps fileté (3) et se poursuivant par une partie formeuse de trou (6) allant en se rétrécissant, **caractérisée** en ce que le corps fileté (3) se raccorde à la partie cylindrique (5), dont la longueur correspond à environ quatre fois l'épaisseur de tôle, par l'intermédiaire d'un rétrécissement (4) faisant partie du corps fileté (3) et s'étendant sur environ quatre filets, en ce que la partie formeuse de trou (6) se termine par une surface de friction bombée (7), qui ramollit la tôle (12) par rotation et correspond à un rayon (R) d'environ 0,5 mm, et en ce que l'ensemble de la vis est réalisé d'une pièce en acier de traitement présentant une résistance à la traction atteignant environ 1400 N/mm², ou en acier de cémentation.

2. Vis selon la revendication 1, à enfoncer par rotation dans une tôle métallique présentant un logement conique, **caractérisée** en ce que la surface de friction bombée (7) correspond à un rayon (R) d'environ 0,5 à 1 mm pour un angle de cône ($\alpha$) du logement (26) d'environ 50° à 70° et une zone de contact (27) avec la surface de friction bombée (7) qui n'est présente que dans la région de l'aire latérale (30) du cône.

3. Vis selon la revendication 1 ou 2, **caractérisée** en ce que la partie formeuse de trou (6) présente une configuration semblable à un cône.

4. Vis selon la revendication 3, **caractérisée** en ce que le cône est doté de plusieurs méplats (10) symétriquement disposés qui, en coupe transversale, se raccordent les uns aux autres de manière coniquement arrondie.

5. Vis selon la revendication 3 ou 4, **caractérisée** en ce que le cône et les méplats (10) se raccordent par un arrondi axial (9) à la partie cylindrique (5).

6. Vis selon l'une quelconque des revendications 1 à 5, **caractérisée** en ce que l'angle au centre du cône est égal à environ 30° à 40°.

7. Vis selon l'une quelconque des revendications 1 à 6, **caractérisée** en ce que le pas $\underline{P}$ du filetage se conforme, par rapport à son diamètre extérieur $\underline{d}$, à la formule suivante :
$$P = 0,15 \text{ à } 0,20 \ d$$

8. Vis selon l'une quelconque des revendications 1 à 7, **caractérisée** en ce que la tête (1) présente, sur son côté inférieur (22) tourné vers le corps fileté, une rainure annulaire (15, 16) dont la paroi intérieure présente un rayon correspondant sensiblement au rayon des flancs du filetage, et qui reçoit le côté frontal (18) d'une buse (13) formée dans la tôle métallique (12; 20, 21) lors de la pénétration de la vis.

9. Vis selon la revendication 8, **caractérisée** en ce que la rainure annulaire (15) présente une section rectangulaire.

10. Vis selon la revendication 8, **caractérisée** en ce que la paroi extérieure (17, 19) de la rainure annulaire (16) s'étend en oblique vers l'extérieur à partir du fond de la rainure.

11. Vis selon l'une quelconque des revendications 8 à 10, **caractérisée** en ce que la rainure annulaire (16) possède une profondeur telle que le côté frontal (18) de la buse (13) est pressé en direction du corps fileté (3) lorsque la vis est serrée.

Fig.1

Fig. 2

Fig.3

Fig. 4

Fig.5

Fig. 8

Fig. 6

Fig. 9

Fig. 7

Fig. 10a

Fig. 11

Fig. 10b

Fig. 12